# EUROPEAN PATENT APPLICATION

(11) **EP 2 348 616 A2**
(43) Date of publication of application: **27.07.2011**
(21) Application number: 11152103.5
(22) Date of filing: 25.01.2011
(51) Int. Cl.: H02K 7/08, H02K 7/09

(54) **Spindle motor**

(30) Priority: 26.01.2010 JP 2010013839
(71) Applicant: Yokogawa Electric Corporation, Musashino-shi 180-8750 Tokyo (JP)
(72) Inventor: Sugita, Shigeru, Tokyo 180-8750 (JP)
(74) Representative: Henkel, Feiler & Hänzel

(57) **Abstract**

There is provided a spindle motor having a high speed rotation and a low vibration with high rotation accuracy and capable of installing discs at locations which are spaced apart from a stator core in a thrust direction while employing fluid dynamic bearings and a pivot bearing. The spindle motor comprises a shaft (28); a bearing housing part (30) formed substantially in a cylindrical shape and having an opening at an upper portion thereof, and provided with fluid dynamic bearings (31, 32) for rotatably supporting the shaft (28) while inserting the shaft (28) into the opening, and a pivot bearing (33); a stator core (35) fitted to an external circumference of the bearing housing part (30) and a coil 34 wound around the stator core (35); a motor hub (21) into which the shaft (28) is fitted at a center thereof and provided with a rotor magnet 27 fitted to an internal circumference thereof so as to oppose the stator core (35) in a radial direction; wherein the motor hub (21) has disc fixing parts (23, 24) provided on an external circumference thereof at least at two locations for fitting discs 25 and 26 thereto; and the fluid dynamic bearings (31, 32) are fitted to an internal circumference of the bearing housing part (30) at least at two locations.

## Description

### BACKGROUND

### Technical Field

The invention relates to a spindle motor for rotating discs, more specifically relates to a spindle motor capable of being used for a high-speed confocal scanner.

### Related Art

A high-speed confocal scanner (confocal microscope) is a microscope for rotating two discs (a microlens disc and a pinhole disc) by a spindle motor, and light is transmitted to the discs to scan an entire domain of an observation target at high speed. The spindle motor requires a high speed rotation and a low vibration with high rotation accuracy for use in the confocal scanner, and two discs have to be rotated while they are spaced apart from each other at predetermined intervals so as to secure a focal length so that at least one disc has to be installed at a position spaced apart from a stator core of the spindle motor at predetermined intervals in a thrust direction.

For a related-art spindle motor meeting these conditions, there is a type using ball bearings.

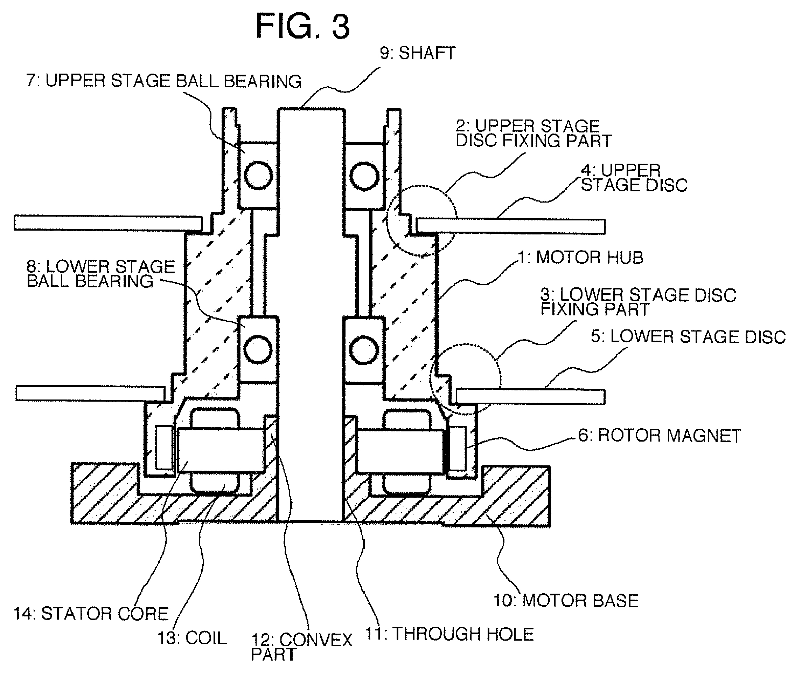

An example of a configuration of the related-art spindle motor using ball bearings is now described with reference to the attached drawing. Fig. 3 is a longitudinal sectional view showing the example of the configuration of the related-art spindle motor. An upper side in the drawing is hereinafter referred to as an upper portion and a lower side in the drawing is hereinafter referred to as a lower portion, but these definitions do not limit an actual fitting state of constituents of the spindle motor.

In Fig. 3, a motor hub 1 is formed substantially in a cylindrical shape having a wall thickness and opened at upper and lower portions thereof. An upper stage disc fixing part 2 and a lower stage disc fixing part 3 are provided in a stage on an external circumference of the motor hub 1, and an upper stage disc 4 and a lower stage disc 5 are fixed to the upper stage disc fixing part 2 and the lower stage disc fixing part 3, respectively. A rotor magnet 6 is fitted to the motor hub 1 at a portion close to the lower edge of an internal circumference of the motor hub 1. An upper stage ball bearing 7 and a lower stage ball bearing 8 are fitted to the internal circumference of the motor hub 1 at the height close to the upper stage disc fixing part 2 and that of the lower stage disc fixing part 3, respectively.

A shaft 9 is concentrically and rotatably fitted to the motor hub 1 via the upper stage ball bearing 7 and the lower stage ball bearing 8. A convex part 12 having a through hole 11 at a center thereof is formed on a motor base 10, and the shaft 9 is fitted into the through hole 11 to be provided to stand erect. A stator core 14 around which a coil 13 is wound is fitted to an external circumference of the convex part 12 at a position opposite to the rotor magnet 6 provided on the internal circumference of the motor hub 1 in a radial direction.

An example of the operation of the spindle motor is described with reference to Fig. 3.

In Fig. 3, if the stator core 14 around which the coil 13 is wound is energized, a rotary magnetic field is generated between the stator core 14 and the rotor magnet 6. Since the motor hub 1 is rotatably fitted to the motor base 10 to which the stator core 14 is fixed via the shaft 9, the upper stage ball bearing 7 and the lower stage ball bearing 8, the motor hub 1 implements a relative rotation with respect to the motor base 10 owing to the rotary magnetic field.

Although there is a possibility that the upper stage disc 4 and the lower stage 5 receive an upward force or a downward force owing to lift and so forth caused by surrounding air when they are rotated at high speed, the motor hub 1 on which the upper stage disc 4 and the lower stage 5 are fitted is supported by the shaft 9 with a sufficient force in a thrust direction by the upper ball bearing 7 and the lower ball bearing 8 so that the motor hub 1 is restricted from being moved vertically.

The high speed rotation of the spindle motor is liable to generate a flexural vibration of the shaft (vibration wherein flexure occurs to the shaft in a direction at right angles to the axis of rotation) caused by a biased center of gravity of the upper stage disc 4 or the lower stage 5, and so forth. The further in the thrust direction that a stage disk is located from a ball bearing, the more likely it is that flexural vibration will occur. In the example of the configuration shown in Fig. 3, since the fitting height of the upper ball bearing 7 and that of the lower ball bearing 8 are positioned close to the upper stage disc fixing part 2 and the lower stage disc fixing part 3, respectively, the distance between the disc and the supporting point in the thrust direction is shrunk to reduce the flexural vibration.

An example of the configuration of the related-art spindle motor using the ball bearings is described in Patent Document 1.

### [Related Art Literature]

Patent Document 1 JP2000-4558A
Patent Document 2 JP2001-50250A

In order to improve performance of a high-speed confocal scanner more than ever, a spindle motor requires a higher speed rotation, a lower vibration, and higher rotation accuracy than the related-art spindle motor. However, according to the related-art spindle motor using ball bearings, there were a problem of limit of the number of rotations, a problem of noise or vibration generated by bearings themselves involved in the rotation thereof, a problem of a life of the bearings caused by abrasion of bearings of the ball bearings, and so forth.

A configuration disclosed in patent document 2 and elsewhere was considered in which fluid dynamic bearings, not ball bearings, are positioned close to a stator core to radially support the shaft, and a pivot bearing supports the shaft in the thrust direction. However, with this configuration, the shaft is sufficiently supported by the pivot bearing in a downward thrust direction but it is not sufficiently supported in an upward thrust direction, causing a problem in that floating of disks caused by the lift is not sufficiently inhibited. Still further, since the fluid dynamic bearings are merely disposed close to the stator core, when the disc fixing parts are installed at positions spaced apart from the stator core in the thrust direction in the case where the spindle motor is used for a confocal scanner, there was another problem in that a flexural vibration is liable to occur to the shaft.

### SUMMARY OF THE INVENTION

Exemplary embodiments of the present invention address the above disadvantages and other disadvantages not described above. However, the present invention is not required to overcome the disadvantages described above, and thus, an exemplary embodiment of the present invention may not overcome any disadvantages.

It is one of illustrative aspects of the present invention to provide a spindle motor having a high speed rotation and a low vibration with high rotation accuracy and capable of installing discs at locations which are spaced apart from a stator core in a thrust direction while employing fluid dynamic bearings and a pivot bearing.

According to one or more illustrative aspects of the invention, there is provided the spindle motor comprising a shaft, a bearing housing part formed substantially in a cylindrical shape and having an opening at an upper portion thereof, and provided with fluid dynamic bearings for rotatably supporting the shaft while inserting the shaft into the opening, and a pivot bearing, a stator core fitted to an external circumference of the bearing housing part and a coil wound around the stator core, a motor hub into which the shaft is fitted at a center thereof and provided with a rotor magnet fitted to an internal circumference thereof so as to oppose the stator core in a radial direction, wherein the motor hub has disc fixing parts provided on an external circumference thereof at least at two locations for fitting discs thereto, and the fluid dynamic bearings are fitted to an internal circumference of the bearing housing part at least at two locations.

### BRIEF DESCRIPTION OF THE DRAWINGS

Fig. 1 is a longitudinal sectional view showing a configuration of a spindle motor according to an embodiment of the invention;
Fig. 2 is a longitudinal sectional view of the spindle motor in which a bearing housing part and a shaft are extracted from the configuration shown in Fig. 1; and
Fig. 3 is a longitudinal sectional view showing an example of a configuration of a related-art spindle motor.

### DETAILED DESCRIPTION OF EXEMPLARY EMBODIMENTS

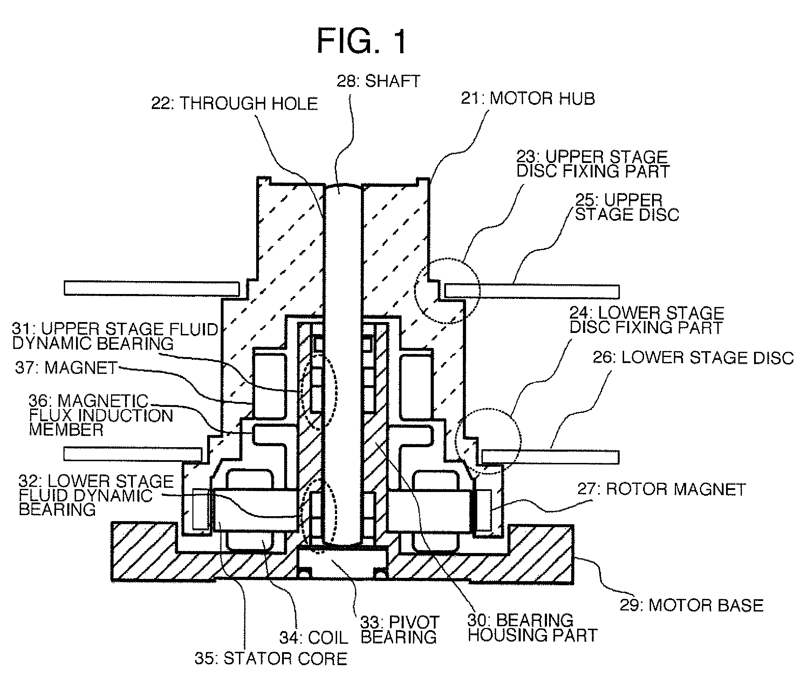

The invention is now described in detail with reference to the attached drawings- Fig. 1 is a longitudinal sectional view showing a configuration of a spindle motor according to an embodiment of the invention.

In Fig. 1, a motor hub 21 has a through hole 22 at an upper portion thereof and it is formed substantially in a cylindrical shape having a wall thickness and opened at a lower portion thereof. An upper stage disc fixing part 23 and a lower stage disc fixing part 24 are provided in a stage on an external circumference of the motor hub 21, and an upper stage disc 25 and a lower stage disc 26 are respectively fitted onto the disc fixing parts 23, 24. A rotor magnet 27 is fitted to an internal circumference of the motor hub 21 at a position close to a lower edge of the motor hub 21. The shaft 28 is fitted into the through hole 22 of the motor hub 21.

A bearing housing part 30 having an opening at an upper portion thereof and formed substantially in a cylindrical shape is integrally fitted to a motor base 29.

An upper stage fluid dynamic bearing 31 and a lower stage fluid dynamic bearing 32 are respectively fitted to an internal circumference of the bearing housing part 30.

A fluid dynamic bearing is a type of bearing for generating a pressure (dynamic pressure) in a lubrication fluid film owing to a relative slide motion between a shaft and bearings, thereby supporting a load by the dynamic pressure. A pivot bearing 33 for supporting the shaft 28 in a thrust direction is provided on the bottom portion of the bearing housing part 30.

The shaft 28 fitted into the motor hub 21 is inserted into the opening provided at the upper portion of the bearing housing part 30, and it is provided rotatably to stand erect by the upper stage fluid dynamic bearing 31, the lower stage fluid dynamic bearing 32 and the pivot bearing 33.

A height of the opening of the bearing housing part 30 when the shaft 28 is provided to stand erect is defined to reach a position close to the upper stage disc fixing part 23, while a height of the upper stage fluid dynamic bearing 31 and a height of the lower stage fluid dynamic bearing 32 are arranged to be close to a height of the upper stage disc fixing part 23 and a height of the lower stage disc fixing part 24, respectively.

A stator core 35 around which a coil 34 is wound is fitted to an external circumference of the bearing housing part 30 at a position opposite to the rotor magnet 27 in a radial direction. A magnetic flux induction member 36 is fitted to the external circumference of the bearing housing part 30 at the position above the stator core 35.

A magnet 37 such as a permanent magnet and so forth is fitted to the internal circumference of the motor hub 21 at a position opposite to the magnetic flux induction member 36 in a thrust direction.

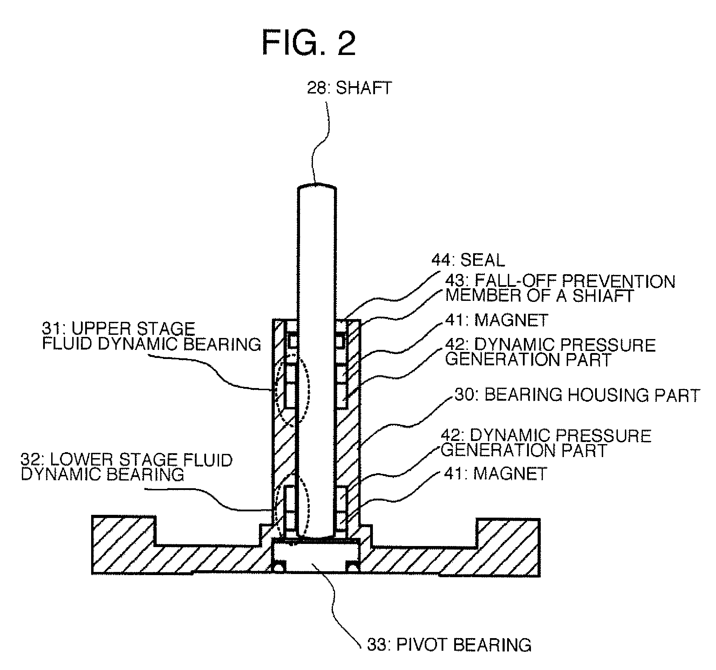

Fig. 2 is a longitudinal sectional view of the spindle motor in which the bearing housing part 30 and the shaft 28 are extracted from the configuration of the embodiment of the invention shown in Fig. 1.

In Fig. 2, the upper stage fluid dynamic bearing 31 and the lower stage fluid dynamic bearing 32 are configured, for example, by a magnet 41 and a dynamic pressure generation part 42, and they are fluid dynamic bearings of a magnetic fluid type that uses the magnetic fluid as lubricant. The fluid dynamic bearings of the magnetic fluid type each have characteristics wherein a lubricant is scarcely leaked out because a lubricant having magnetism by the magnet is held by the fluid dynamic bearings.

A fall-off prevention member 43 of the shaft 28 is provided on the shaft 28 and a seal 44 is fitted to the bearing housing part 30 so that the fall-off prevention member 43 of the shaft 28 is restricted from being moved upward by the seal 44, thereby preventing the shaft 28 from being fallen off in the worst case. The seal 44 also has an effect to prevent the lubricant from being leaked out.

An example of operation of the spindle motor having the foregoing configuration is now described with reference to Fig. 1.

In Fig. 1, when the stator core 35 around which the coil 34 is wound is energized, a rotary magnetic field is generated between the stator core 35 and the rotor magnet 27.

Since the shaft 28 is rotatably supported by the upper stage fluid dynamic bearing 31 and the lower stage fluid dynamic bearing 32 in a radial direction, and by the pivot bearing 33 in a thrust direction so that the motor hub 21 and the shaft 28 implement a relative rotation with respect to the motor base 29 owing to the rotary magnetic field.

At this point in time, although the upper stage disc 25 and the lower stage disc 26 respectively fixed to the motor hub 21 are also rotated, if they are rotated at high speed at 10,000 rpm or more, there is a possibility that these discs 25 and 26 receive an upward force or a downward force owing to the lift and so forth caused by surrounding air. Since the pivot bearing 33 is provided on the bottom portion of the bearing housing part 30, the motion of the shaft 28 in a downward thrust direction can be restricted by the bearing housing part 30, however if a force is generated in an upward thrust direction, the motion of the shaft 28 in the upward thrust direction cannot be sufficiently restricted by the pivot bearing 33. The magnetic flux induction member 36 and the magnet 37 are provided for restricting the motion of the shaft 28 in the upward thrust direction. The motor hub 21 always receives a downward force relative to the motor base 29 owing to a magnetic attraction force generated between the magnetic flux induction member 36 fitted to the external circumference of the bearing housing part 30 and the magnet 37 fitted to the internal circumference of the motor hub 21, thereby inhibiting the shaft 28 from being floated by the lift which the upper stage disc 25 and the lower stage disc 26 receive.

Further, according to the present embodiment, an upper end of the opening provided at the upper portion of the bearing housing part 30 is designed to reach a height close to the upper stage disc fixing part 23 so as to control the flexural vibration, which is liable to occur when the discs are fitted to the motor hub 21 at the height spaced apart from a radial supporting point, and the upper stage fluid dynamic bearing 31 and the lower stage fluid dynamic bearing 32 are fitted to the internal circumference of the bearing housing part 30 at the height close to the upper stage disc fixing part 23 and the height close to the lower stage disc fixing part 24, respectively, thereby reducing the difference in height between the disc and radial supporting point, to reduce the flexural vibration.

According to the present embodiment, although the positions of the upper stage fluid dynamic bearing 31 and lower stage fluid dynamic bearing 32, that are respectively fitted to the internal circumference of the bearing housing part 30, are defined as heights close to the heights of the upper stage disc fixing part 23 and lower stage disc fixing part 24, the flexural vibration may be reduced by sufficiently spacing between the upper stage fluid dynamic bearing 31 and the lower stage fluid dynamic bearing 32 (for example, a distance between the upper stage fluid dynamic bearing 31 and lower stage fluid dynamic bearing 32 is equal to a distance between the upper stage disc fixing part 23 and lower stage disc fixing part 24).

Further, the upper stage fluid dynamic bearing 31 and the lower stage fluid dynamic bearing 32 may be fluid dynamic bearings of a non-magnetic type using a lubricant having no magnetism.

A magnetic flux induction member may be fitted to the internal circumference of the motor hub 21, and a magnet may be fitted to the external circumference of the bearing housing part 30.

With the foregoing configuration of the invention, the bearing housing part 30 formed substantially in a cylindrical shape and having the opening at the upper portion thereof is integrally fitted to the motor base 29, the upper stage fluid dynamic bearing 31 and the lower stage fluid dynamic bearing 32 are respectively fitted to the internal circumference of the bearing housing part 30, the pivot bearing 33 is provided onto the bottom portion of the bearing housing part 30 for supporting the shaft 28 in a thrust direction, the shaft 28 fitted into the motor hub 21 is inserted through the opening at the upper portion of the bearing housing part 30, the shaft 28 is provided rotatably to stand erect by the upper stage fluid dynamic bearing 31, the lower stage fluid dynamic bearing 32 and the pivot bearing 33, the height of the upper stage fluid dynamic bearing 31 and the height of the lower stage fluid dynamic bearing 32 are defined to be close to the height of the upper stage disc fixing part 23 and that of the lower stage disc fixing part 24, respectively, the stator core 35 around which the coil 34 is wound is fitted to the external circumference of the bearing housing part 30 so as to oppose the rotor magnet 27, the magnetic flux induction member 36 is fitted the external circumference of the bearing housing part 30 at the position above the stator core 35, and the magnet 37 is fitted to the internal circumference of the motor hub 21 so as to oppose the magnetic flux induction member 36 in a thrust direction.

Accordingly, the motor hub 21 always receives a downward force owing to an electromagnetic attraction generated between the magnet 37 on the internal circumference of the motor hub 21 and the magnetic flux induction member 36 on the external circumference of the bearing housing part 30, thereby inhibiting the shaft 28 from being floated by the lift which the upper stage disc 25 and the lower stage disc 26 receive. The upper stage fluid dynamic bearing 31 and the lower stage fluid dynamic bearing 32 are fitted to the internal circumference of the bearing housing part 30 at the height close to the upper stage disc fixing part and the height close to the lower stage disc fixing part 24, respectively, thereby shrink a distance between each disc and a supporting point thereof in a thrust direction to reduce the flexural vibration of the shaft 28.

Therefore, it is possible to realize a spindle motor having a high speed rotation and a low vibration with high rotation accuracy and capable of inhibiting the shaft 28 from being floated and reducing the flexural vibration of the shaft 28 while employing the fluid dynamic bearings and the pivot bearing.

While the present invention has been shown and described with reference to certain exemplary embodiments thereof, other implementations are within the scope of the claims. It will be understood by those skilled in the art that various changes in form and details may be made therein without departing from the spirit and scope of the invention as defined by the appended claims.

## Claims

1. A spindle motor comprising^{:}
a shaft (28);
a bearing housing part (30) formed substantially in a cylindrical shape and having an opening at an upper portion thereof, and provided with fluid dynamic bearings (31, 32) for rotatably supporting the shaft (28) while inserting the shaft (28) into the opening, and a pivot bearing (33);
a stator core (35) fitted to an external circumference of the bearing housing part (30) and a coil (34) wound around the stator core (35);
a motor hub (21) into which the shaft (28) is fitted at a center thereof and provided with a rotor magnet (27) fitted to an internal circumference thereof so as to oppose the stator core (35) in a radial direction;
wherein the motor hub (21) has disc fixing parts (23, 24) provided on an external circumference thereof at least at two locations for fitting discs (25 and 26) thereto; and
the fluid dynamic bearings (31, 32) are fitted to an internal circumference of the bearing housing part (30) at least at two locations.

2. The spindle motor according to claim 1 further comprising:
a magnetic flux induction member (36) fitted to the external circumference of the bearing housing part (30); and
a magnet (37) fitted to the internal circumference of the motor hub (21) so as to oppose the magnetic flux induction member (36) in a thrust direction.

3. The spindle motor according to claim 1 further comprising:
a magnet (37) fitted to the external circumference of the bearing housing part (30); and
a magnetic flux induction member (36) fitted to the internal circumference of the motor hub (21) so as to oppose the magnet (37) in a thrust direction.

4. The spindle motor according to any one of claims 1 to 3, wherein a microlens array disc and a pinhole disc are fixed to the motor hub (21) for use in a confocal scanner.

5. The spindle motor according to any one of claims 1 to 4, wherein at least at two locations where the fluid dynamic bearings (31, 32) are fitted to the internal circumference of the bearing housing part (30) are close to a height of the upper stage disc fixing part (23) and that of the lower stage disc fixing part (24), respectively.

6. The spindle motor according to any one of claims 1 to 4, wherein a distance between at least two positions where the fluid dynamic bearings (31, 32) are fitted is substantially the same as a distance between at least two locations of the disc fixing parts (23, 24).
